# EUROPEAN PATENT SPECIFICATION

(11) **EP 4 343 318 B1**
(45) Date of publication and mention of the grant of the patent: **01.07.2026**
(21) Application number: 22864183.3
(22) Date of filing: 05.08.2022
(51) Int. Cl.: G01N 29/06, G01N 29/48, G01N 29/38, G01N 29/04

(54) **ULTRASONIC INSPECTION METHOD, ULTRASONIC INSPECTION DEVICE, AND PROGRAM**
ULTRASCHALLPRÜFVERFAHREN, ULTRASCHALLPRÜFVORRICHTUNG UND PROGRAMM
PROCÉDÉ ET DISPOSITIF D'INSPECTION ULTRASONORE ET PROGRAMME

(30) Priority: 30.08.2021 JP 2021140095
(43) Date of publication of application: 27.03.2024
(73) Proprietor: Mitsubishi Heavy Industries, Ltd., Tokyo 100-8332 (JP)
(72) Inventor: HAYASHI, Kyohei, Tokyo 100-8332 (JP); URATA, Mikiyasu, Tokyo 100-8332 (JP); AMANO, Yui, Tokyo 100-8332 (JP)
(74) Representative: Studio Torta S.p.A.
(86) International application number: PCT/JP2022/030173
(87) International publication number: WO 2023/032597

(56) References cited:
- WO-A1-2013/161834
- JP-A- 2008 309 564
- JP-A- 2017 198 459
- JP-A- 2021 032 754
- JP-A- 2021 103 100
- JP-A- H05 113 378
- US-A- 5 303 590
- US-A1- 2016 231 291
- SMAGULOVA DAMIRA ET AL: "Novel Processing Algorithm to Improve Detectability of Disbonds in Adhesive Dissimilar Material Joints", vol. 21, no. 9, 27 April 2021 (2021-04-27), CH, pages 3048, XP093186938, ISSN: 1424-8220, Retrieved from the Internet <URL:https://www.mdpi.com/1424-8220/21/9/3048/pdf> [retrieved on 20240716], DOI: 10.3390/s21093048

## Description

### Field

The present invention relates to an ultrasonic testing method, an ultrasonic testing device, and a program.

### Background

Conventionally, there has been a known technology related to a testing method for detecting internal defects of a test specimen by scanning the test specimen with ultrasonic signals. Laminate structures, which are laminations of a plurality layers, are sometimes tested as test specimens. For example, Patent Literature 1 discloses a delamination testing method for a laminate. In this method, a laminate, which is a lamination of a plurality of members, is tested for the presence of a delamination, by placing a transducer element on one side of the laminate and causing the probe to output ultrasonic waves and to receive multi-reflected waves, and by evaluating the received multi-reflected waves. According to Patent Literature 1, defects such as delamination in a subject laminate are detected by testing a flawless laminate in advance, and comparing the test result with a test result of the subject laminate.

### Citation List

### Patent Literature

Patent Literature 1: Japanese Patent No. 5624250
Patent literature 2 : US5303590

### Not-Patent Literature :

Article « Novel Processing Algorithm to Improve Detectability of Disbonds in Adhesive Dissimilar Material Joints" by Damira Smagulova, Liudas Mazeika and Elena Jasiuniene.

### Summary

### Technical Problem

Defects in a test specimen of a laminate structure can be detected by making an evaluation based on the test result of a flawless laminate, as described in Patent Literature 1. However, some test specimens have thicknesses or structures different from those of a flawless laminate, due to factors such as manufacturing errors. In addition, every time the test specimen is changed, reference information needs to be collected using a flawless laminate, and this makes the test time-consuming.

In view of the above, an object of the present disclosure is to improve the efficiency and accuracy of testing of a test specimen having a laminate structure. Solution to Problem

In order to solve the problems described above and achieve the object, an ultrasonic testing method is provided as set out in claim 1.

In order to solve the problems described above and achieve the object, an ultrasonic testing device is provided as set out in claim 9.

In order to solve the problems described above and achieve the object, a program is provided as set out in claim 10.

### Advantageous Effects of Invention

The present disclosure has the effect of enabling improvements in the efficiency and the accuracy of testing of a test specimen having a laminate structure.

### Brief Description of Drawings

FIG. 1 is a schematic illustrating a general configuration of an ultrasonic testing device according to an embodiment.
FIG. 2 is a block diagram illustrating a general configuration of the ultrasonic testing device according to the embodiment.
FIG. 3 is a schematic of another example of a probe.
FIG. 4 is a flowchart illustrating the sequence of a process of an ultrasonic testing method according to the embodiment.
FIG. 5 is a schematic for explaining an example of a process of a data collecting step in the ultrasonic testing method.
FIG. 6 is a schematic for explaining an example of the process of the data collecting step in the ultrasonic testing method.
FIG. 7 is a schematic for explaining signals received by the probe.
FIG. 8 is a graph indicating the strengths of signals received on a flawless position of the test specimen.
FIG. 9 is a graph indicating the strengths of signals received on a position of a defect in the test specimen.
FIG. 10 is a schematic illustrating an example of a created image.
FIG. 11 is a schematic illustrating an enlargement of a part of the image illustrated in FIG. 10.
FIG. 12 is a schematic illustrating an example of a created image.

### Description of Embodiments

An ultrasonic testing method, an ultrasonic testing device, and a program according to an embodiment of the present invention will now be explained in detail with reference to the drawings. These embodiments are, however, not intended to limit the scope of the present invention, which is defined solely by the appended claims.

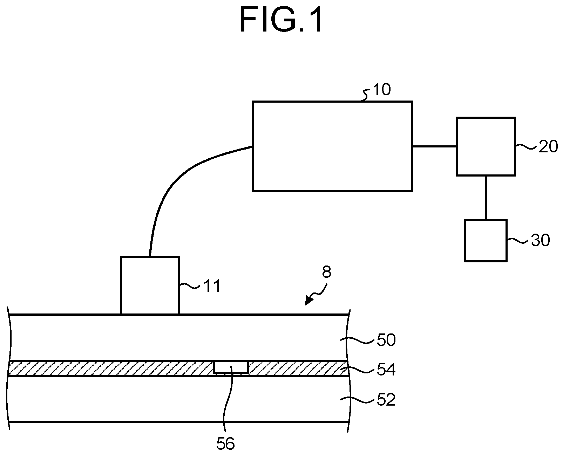

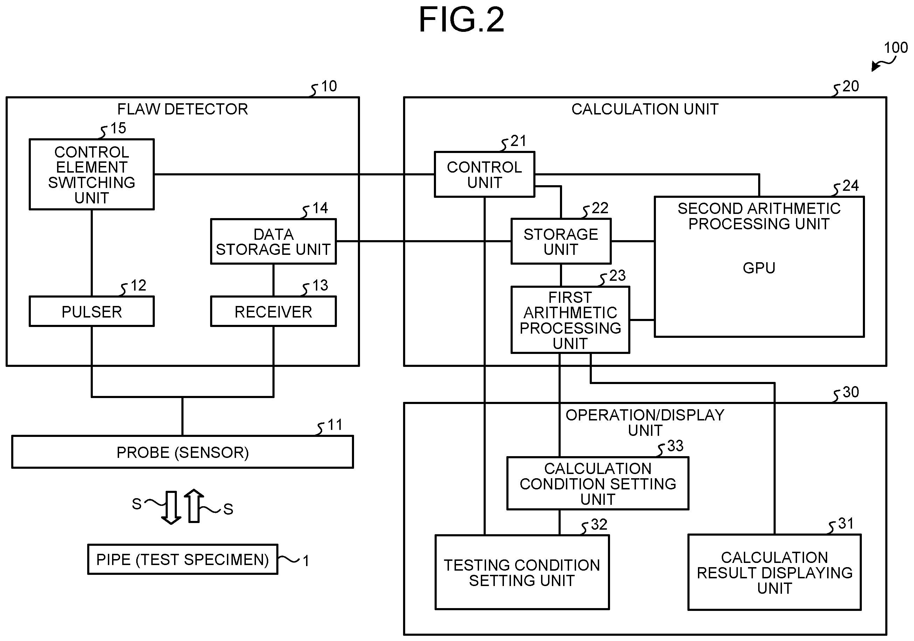

FIG. 1 is a schematic illustrating a general configuration of the ultrasonic testing device according to the embodiment. FIG. 2 is a block diagram illustrating a general configuration of the ultrasonic testing device according to the embodiment.

In this embodiment, a test specimen 8 is a laminate structure. The test specimen 8 includes a first layer 50, a second layer 52, and a bonding layer 54. The first layer 50 is a member disposed on a surface of the test specimen 8. The second layer 52 is a member laminated to the first layer 50. The first layer 50 and the second layer 52 may be made of various materials transmitting ultrasonic waves. The first layer 50 and the second layer 52 may be made of a metal, a ceramic, or the like. The first layer 50 and the second layer 52 in this embodiment are members each having a constant thickness. The first layer 50 and the second layer 52 may have structures each having different thicknesses at different positions. The bonding layer 54 is interposed between the first layer 50 and the second layer 52, and bonds the first layer 50 and the second layer 52. The ultrasonic exploration device 10 according to the embodiment detects the position and the size of a defect 56 in the test specimen 8. The defect 56 is a region where there is defective bonding in the bonding layer 54. The defect 56 is a region where the air has gotten inside, or a material other than that of the bonding layer 54 have become mixed.

Explained in the embodiment is an example in which the test specimen 8 is a structure including the first layer 50, the second layer 52, and the bonding layer 54, and in which the defect 56 in the bonding layer 54 is to be detected, but the embodiment is not limited thereto. The test specimen 8 may have another layer placed on the second layer 52, on the opposite side of the first layer 50. Furthermore, the position to be tested may also be a boundary between the second layer 52 and another layer. In this embodiment, the layers are bonded via the bonding layer 54. However, it is also possible for the first layer 50 and the second layer 52 to be bonded to each other directly.

### Ultrasonic Testing Device

An ultrasonic testing device 100 is a testing device (flaw detector device) for detecting internal defects (performing a flaw detection) in a test specimen. In this embodiment, the ultrasonic testing device 100 detects a defect between the first layer 50 and the second layer 52 of the test specimen 8, more specifically, a defect in the bonding layer 54. As illustrated in FIG. 1, the ultrasonic testing device 100 according to this embodiment includes a flaw detector 10, a calculation unit 20, and an operation/display unit 30.

### Flaw Detector

The flaw detector 10 includes a probe 11, a pulser (pulse generator) 12, a receiver 13, a data storage unit 14, and a control element switching unit 15. The probe 11 includes one transducer element 110. The transducer element 110 is connected to the pulser 12 serving as a transmitter unit, and the receiver 13 serving as a receiver unit. The transducer element 110 transmits the ultrasonic signal S received from the pulser 12 to the test specimen 8, as indicated by a white arrow in FIG. 2. The transducer element 110 also receives the ultrasonic signal S reflected from the test specimen 8, and sends the received ultrasonic signal S to the receiver 13. The ultrasonic signal S received by the receiver 13 is stored in the data storage unit 14. The control element switching unit 15 controls the timings such as the timing at which the pulser 12 oscillates the ultrasonic signals, and the timing at which the receiver receives the ultrasonic signals.

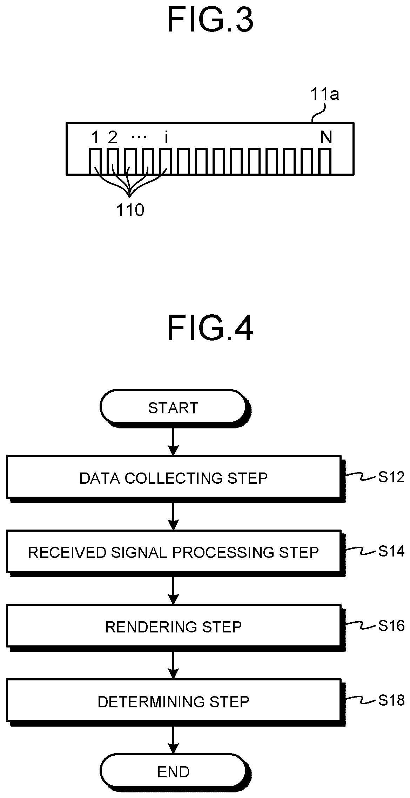

FIG. 3 is a schematic of another example of the probe. The probe may include a plurality of transducer elements. A probe 11a illustrated in FIG. 3 include a plurality of (N) transducer elements 110. The transducer elements 110 illustrated in FIG. 3 are arranged as a linear array. The i-th transducer element (where i is an integer between 1 and N) 110 is referred to as a transducer element 110i. Each of the transducer elements 110 is connected to the pulser 12 serving as a transmitter unit, and the receiver 13 serving as a receiver unit. Each of the transducer elements 110 transmits the ultrasonic signal S received from the pulser 12 to the test specimen 8, as indicated by a white arrow in FIG. 1. Each of the transducer elements 110 receives the ultrasonic signal S reflected from the test specimen 8, and sends the received ultrasonic signal S to the receiver 13. The ultrasonic signal S received by the receiver 13 is stored in the data storage unit 14. The control element switching unit 15 may be configured to switch, among the transducer elements 110, the transducer element 110 for transmitting the ultrasonic signal S received from the pulser 12, based on an instruction from a control unit 21 included in the calculation unit 20, which will be described later.

### Calculation unit

In this embodiment, the calculation unit 20 is an arithmetic processing device provided separately from the flaw detector 10, and connected to the flaw detector 10. The calculation unit 20 is, for example, an externally connected personal computer. The calculation unit 20 may also be provided integrally with the flaw detector 10. The calculation unit 20 includes the control unit 21, a storage unit 22, a first arithmetic processing unit 23, and a second arithmetic processing unit 24.

### Control unit

The control unit 21 is an arithmetic processing device implemented as a central processing unit (CPU), for example. The control unit 21 is connected to the control element switching unit 15 in the flaw detector 10, the storage unit 22, the second arithmetic processing unit 24, and a testing condition setting unit 32 included in the operation/display unit 30, which will be described later. The control unit 21 loads a program stored in the storage unit 22 onto a memory, and executes the instructions included in the program. More specifically, the control unit 21 acquires testing condition information set by a user, from the testing condition setting unit 32. Based on the acquired testing condition information, the control unit 21 controls the control element switching unit 15 to cause each of the transducer elements 110 included in the probe 11 to sequentially transmit an ultrasonic signals S to the test specimen 8, and collects the data related to the ultrasonic signals S reflected from the test specimen 8. Once the data collection is completed, the control unit 21 instructs the second arithmetic processing unit 24 to perform various types of processing on the collected data.

### Storage Unit

The storage unit 22 stores therein data (programs) required for various processes executed by the ultrasonic testing device 100. The storage unit 22 is, for example, a semiconductor memory element such as a random-access memory (RAM), a read-only memory (ROM), a flash memory, or a storage device such as a hard disk or an optical disc. The storage unit 22 is connected to the data storage unit 14 in the flaw detector 10, and to the first arithmetic processing unit 23 and the second arithmetic processing unit 24. The storage unit 22 receives data related to the ultrasonic signals S from the data storage unit 14, and stores therein the received data. The storage unit 22 transmits the data related to the ultrasonic signals S stored therein to the first arithmetic processing unit 23 and the second arithmetic processing unit 24, upon receiving a request therefrom.

### First Arithmetic Processing Unit

The first arithmetic processing unit 23 is an arithmetic processing device implemented as a CPU, for example. The first arithmetic processing unit 23 is connected to the storage unit 22, the second arithmetic processing unit 24, and a calculation condition setting unit 33 and a calculation result displaying unit 31 included in the operation/display unit 30. The first arithmetic processing unit 23 loads a program stored in the storage unit 22 onto the memory, and executes the instructions included in the program. The first arithmetic processing unit 23 acquires information on calculation conditions that are set based on the testing conditions, from the calculation condition setting unit 33. The first arithmetic processing unit 23 sends the acquired calculation conditions to the second arithmetic processing unit 24. The first arithmetic processing unit 23 also sends the result calculated by the second arithmetic processing unit 24 to the calculation result displaying unit 31.

### Second Arithmetic Processing Unit

The second arithmetic processing unit 24 is an arithmetic processing device implemented as a graphics processing unit (GPU). The second arithmetic processing unit 24 is connected to the control unit 21, the storage unit 22, and the first arithmetic processing unit 23. In this embodiment, the second arithmetic processing unit 24 is what is called a GPGPU, and also performs processing other than image rendering processing using the GPU. In this manner, it is possible to increase the calculation speed. At least one GPU is required, but a plurality of GPUs may also be used in parallel. The second arithmetic processing unit 24 receives the data related to the ultrasonic signals S, from the storage unit 22. The second arithmetic processing unit 24 processes the data related to the ultrasonic signals S, i.e., the data obtained by scanning the test specimen 8, based on an instruction received from the control unit 21 and the calculation condition information received from the first arithmetic processing unit 23, and prepares a calculation result that is the rendering of the internal structure of the test specimen 8.

### Operation/Display Unit

The operation/display unit 30 is an device having both of a display function for displaying a testing result and an input operation function that serves as a user interface. The operation/display unit 30 may be, for example, a touch panel display. In this embodiment, the operation/display unit 30 is provided separately from the flaw detector 10, and is connected to the calculation unit 20. The operation/display unit 30 may also be integrated with the flaw detector 10. The operation/display unit 30 is not limited to a touch panel display, and a display function for displaying a testing result and an operation function serving as a user interface may be installed in units separated from each other.

The operation/display unit 30 includes the calculation result displaying unit 31, the testing condition setting unit 32, and the calculation condition setting unit 33, as illustrated in FIG. 2. The calculation result displaying unit 31 is connected to the first arithmetic processing unit 23 in the calculation unit 20. The calculation result displaying unit 31 displays a result of the calculation performed by the second arithmetic processing unit 24 and received from the first arithmetic processing unit 23, i.e., a rendering result of the internal structure of the test specimen 8, to the user.

The testing condition setting unit 32 is a user interface on which a user sets testing conditions. The testing conditions include information such as a probe configuration, a detected frequency, probe movement conditions, and position information. The testing conditions also include information such as information on the laminate structure, the material, and the thickness of the test specimen 8, and the layer to be tested in the test specimen 8.

The calculation condition setting unit 33 sets calculation conditions based on the testing conditions entered by a user, and sends the calculation conditions to the first arithmetic processing unit 23 in the calculation unit 20. The calculation conditions are various conditions required in performing calculations in the second arithmetic processing unit 24, based on the information on the testing conditions described above.

### Ultrasonic Testing Method

The sequence of a process of the ultrasonic testing method according to the embodiment will now be explained. FIG. 4 is a flowchart illustrating the sequence of the process of the ultrasonic testing method according to the embodiment. The sequence of the process illustrated in FIG. 4 is performed by causing the control unit 21, the first arithmetic processing unit 23, and the second arithmetic processing unit 24 in the calculation unit 20 to execute a program stored in the storage unit 22. The sequence of the process illustrated in FIG. 4 is performed with the flaw detector 10 positioned at a predetermined location on the test specimen 8.

The calculation unit 20 causes the control unit 21 to execute a data collecting step (data collecting process) as Step S12. The data collecting step is a step for scanning the test specimen 8 with ultrasonic signals.

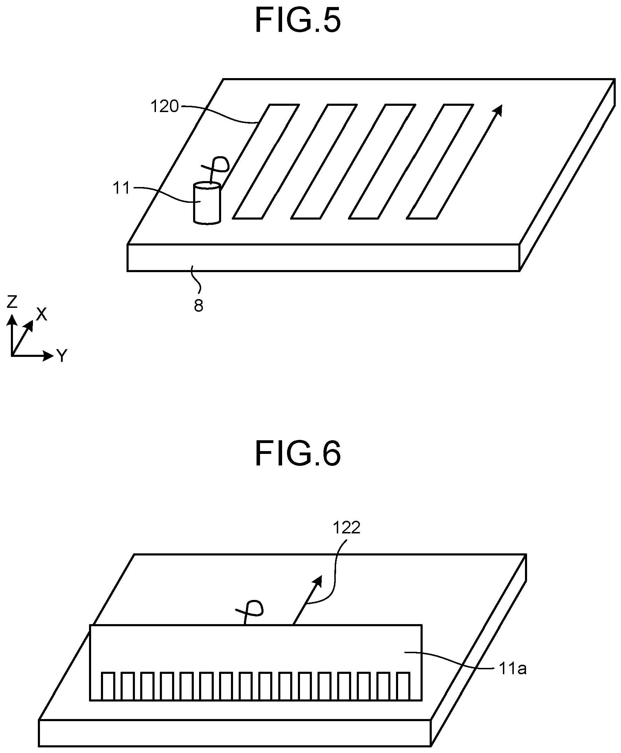

FIG. 5 is a schematic for explaining an example of the process of the data collecting step in the ultrasonic testing method. In the test specimen 8, the thickness direction (the direction of the lamination) is denoted as a Z direction. One direction across a plane in parallel with the surface of the first layer is denoted as an X direction, and another direction orthogonal to the X direction is denoted as a Y direction. At Step S10, scanning is executed with the probe 11 by moving the probe 11 along a route 120, as illustrated in FIG. 5. Specifically, by moving the probe 11 in the X direction, scanning is performed at each position with the ultrasonic signal. After the probe 11 is moved by a predetermined range, the probe 11 is moved by a certain distance in the Y direction and turned back, and by moving the probe 11 in the X direction, scanning is then performed at each position with the ultrasonic signal. In this manner, the probe 11 scans the first layer, as the probe 11 is scanned across the XY plane, and receives the ultrasonic signals reflected from the respective positions. At this time, the probe 11 is kept fixed at a measurement position during the measurement, and, upon completion of the measurement at the measurement position, moved to the next position and kept at the position for the measurement.

FIG. 6 is a schematic for explaining an example of a process of the data collection step in the ultrasonic testing method. When a plurality of transducer elements 110 are linearly arranged in one direction, as illustrated in FIG. 6, as in the probe 11a, the scanning is performed while moving the probe along a route 122, which is orthogonal to the direction of the array.

The ultrasonic testing method according to the embodiment will be explained assuming a configuration in which a pulser in one transducer element receives the ultrasonic wave output from the pulser included in the transducer element. However, the ultrasonic wave output from the pulser of one transducer element may also be received by the pulser of another transducer element. Furthermore, the transducer element may also be enabled to oscillate and to receive ultrasonic waves while the transducer element is being moved. In such a case, the position being subjected to a flaw detection can be identified by correcting the timing and the strength of the received signal, based on the distance and the movement of the transducer element.

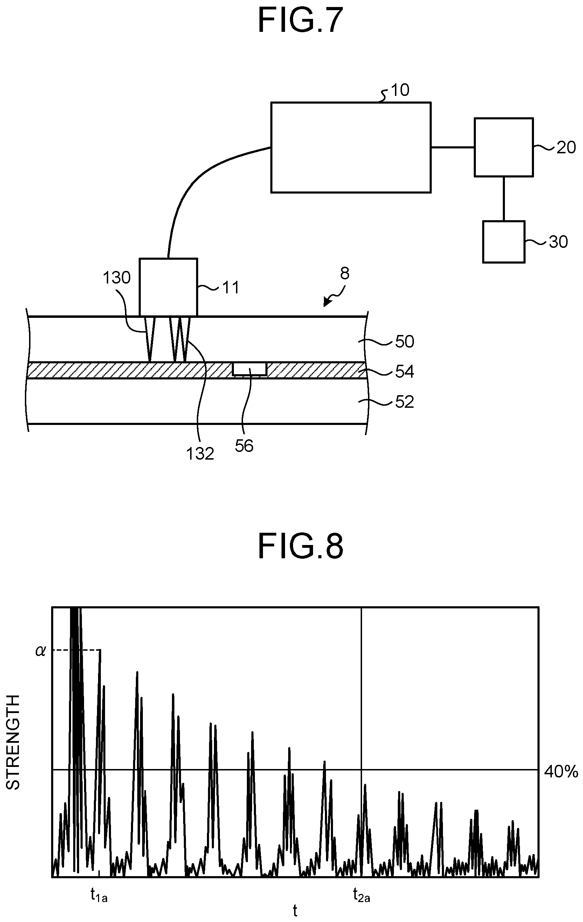

The calculation unit 20 causes the second +arithmetic processing unit 24 to execute a received signal processing step at Step S14. FIG. 7 is a schematic for explaining signals received by the probe.

In this example, ultrasonic signals output from the probe 11 and becoming incident on the test specimen 8 are reflected on a boundary in the test specimen 8. For example, the ultrasonic signals include: a signal 130 having reflected on the boundary between the first layer 50 and the bonding layer 54 and become incident on the probe 11; and a signal 132 having reflected on the boundary between the first layer 50 and the bonding layer 54, having reflected on the boundary between the first layer 50 and the surface, reflected again on the boundary between the first layer 50 and the bonding layer 54, and having become incident on the probe 11. In FIG. 7, the signals 130, 132 are illustrated as forming an angle with respect to the vertical direction, so as to enable the number of roundtrips recognizable, but the ultrasonic waves becoming incident on the surface of the first layer 50 at a right angle follows the same path to reach the probe 11. Furthermore, although FIG. 7 illustrates the signal 130 as being reflected once and the signal 132 as being reflected twice, the ultrasonic signals becoming incident from the probe on the test specimen 8 are reflected a large number of times on each of these boundaries. In addition, the ultrasonic signal from the probe and becoming incident on the test specimen 8 includes a component reflected on the boundary between the second layer 52 and the bonding layer 54, and a component reflected on the boundary between the second layer 52 and the bonding layer 54 and then reflected on the boundary between the bonding layer 54 and the first layer 50 back toward the second layer 52, that is, a component reflected within the bonding layer 54.

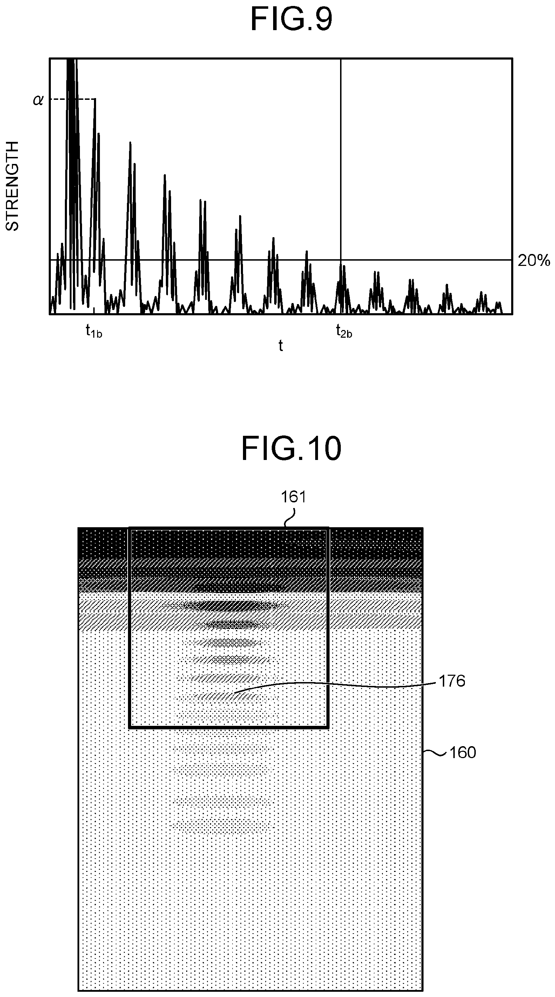

The receiver 13 in the probe 11 detects ultrasonic signals having gone through reflections different numbers of times, and having traveled different distances through the test specimen 8. At this time, the ultrasonic signals are detected, in units of the number of times the ultrasonic signals have reflected, at the time dependent on the speed and the distance of travel of the ultrasonic signals output from the pulser 12. FIG. 8 is a graph indicating the strengths of signals received from a flawless position in the test specimen. FIG. 9 is a graph indicating the strengths of signals received on a position of a defect in the test specimen. In FIGS. 8 and 9, the horizontal axis represents the time t, and the vertical axis represents the strength [dB]. The signals received at time t₁ₐ, t_{1b} represent the strengths of the signals having reflected once on the boundary between the first layer 50 and the bonding layer 54, and then become incident on the receiver. The signals received at time t₂ₐ, t_{2b} represent the strengths of the signals having reflected eight times on the boundary between the first layer 50 and the bonding layer 54, and then become incident on the receiver. As illustrated in FIGS. 8 and 9, the detections of the signals reflected on the boundary different numbers of times appear as successive peaks, respectively. As illustrated in FIGS. 8 and 9, by normalizing signal strengths with the signal received at the time t₁ₐ, t_{1b}, it is possible to clarify the difference in the strength of the signal received at the time t₂ₐ with no defect, and the strength of the signal received at the time t_{2b} with a defect.

The second arithmetic processing unit 24 detects a signal corresponding to each number of times the signals have reflected, based on the timing at which the signals are detected and the strengths of the signals. The second arithmetic processing unit 24 also maps each of the detected signals to a position and detects the reflected signal at that position. The second arithmetic processing unit 24 also normalizes the strength corresponding to each number of times the signals are reflected, based on the signal strength corresponding to a reference reflection count. In FIGS. 8 and 9, denoting the strength of the signal reflected once as α, the strengths of the signal reflected twice or more are calculated.

The calculation unit 20 then causes the second arithmetic processing unit 24 to execute a rendering step, as Step S16. The second arithmetic processing unit 24 creates an image delineating the strength of the signal corresponding to each position of the test specimen, by mapping the processed signal strength at each position to the position at which the signal is measured.

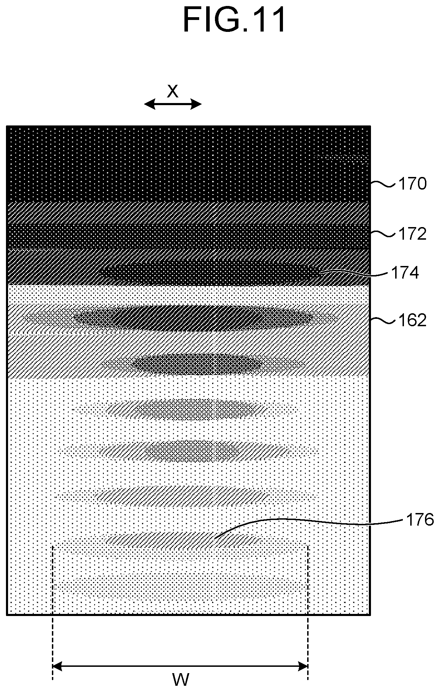

FIG. 10 is a schematic illustrating an example of the created image. FIG. 11 is a schematic illustrating an enlargement of a part of the image illustrated in FIG. 10. In this image 160 illustrated in FIG. 10, the horizontal axis represents a line segment along one direction on the XY plane of the test specimen 8, and the vertical axis represents the strength of the signal received at each increment of time. The upper end of the vertical axis represents the time at which the ultrasonic signal is output from the pulser, and the strengths measured later in time are represented closer to the bottom end. FIG. 11 illustrates an image 162 that is an enlargement of the area inside a frame 161 in the image 160.

The images 160 and 162 illustrated in FIGS. 10 and 11, respectively, are extractions of signal components reflected on a boundary of the test specimen 8, that is, reflected at the same position in the Z direction. As illustrated in an image 170, an area 172 represents the strength of the signal reflected once on the boundary. An area 174 represents the strength of the signal reflected twice on the boundary. An area 176 represents the strength of the signal reflected eight times on the boundary. The image 160 illustrated in FIG. 10 and the image 162 illustrated in FIG. 11 provide comparisons of the signal strengths of the signals reflected at the same position but by different numbers of times. An area corresponding to the area 176 in the X direction exhibits a different reflection strength, from those of the rest of the area, and thus corresponds to the position with a defect.

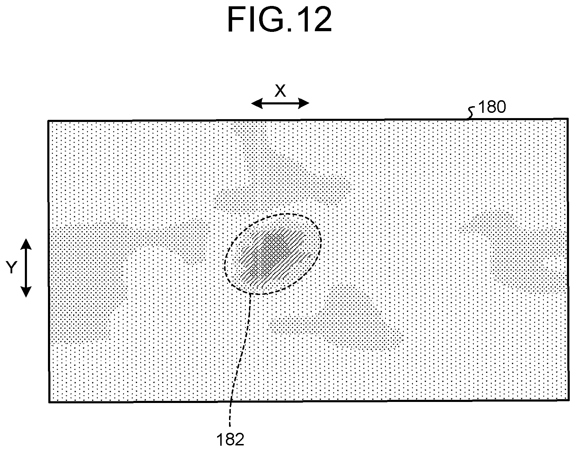

FIG. 12 is a schematic illustrating an example of the created image. Created is an image 180 representing a plot of the strengths of components reflected on the boundary the same number of times, e.g., eight times in this embodiment, that is, a plot of the strengths of the reflections at respective points of the area 176, onto the XY plane of the test specimen 8. In an image 180, the area 182 has reflection strengths different from those of the rest of the image, and corresponds to a portion with a defect.

The calculation unit 20 causes the second arithmetic processing unit 24 to execute an evaluating step, as Step S18. The second arithmetic processing unit 24 analyzes the created image, and calculates the position and the size of the defect. For example, the second arithmetic processing unit 24 evaluates the size of the defect as W, based on the size of the area 176, as illustrated in FIG. 11, when the signals reflected eight times are used as a reference. When the image 180 on the XY plane is created, as illustrated in FIG. 12, the second arithmetic processing unit 24 evaluates the size of the defect based on the area 182.

As explained above, this ultrasonic testing method includes receiving ultrasonic signals having reflected a plurality of numbers of times at each position of the test specimen 8, creating a processed image based on a result of comparing detection results of the received signals having reflected different number of times, among the signals having reflected the plurality of numbers of times, and determining a defect based on the created image. In this manner, it becomes possible to test a test specimen with a laminate structure at a higher efficiency and accuracy. Specifically, detection signals having reflected a fewer number of times, e.g., signals having reflected once, among those having reflected the plurality of numbers of times, exhibit a smaller strength difference between areas with and without a defect. This ultrasonic testing method uses the number of times the signals have reflected, the number resulting in a small signal strength variation among the signals detected from the positions with and without defects, as a reference count, and compares, based on the strength of signals corresponding to this reference count, the strengths of signals detected from respective positions of the test specimen 8 and having gone through reflections of a target reflection count to be evaluated. In this manner, it becomes possible to normalize the signals detected from the test specimen 8, and to compare the normalized signals, so that a flawless area and a defect can be determined based on information detected from one test specimen 8. Furthermore, because it is possible to obtain a plurality of pieces of data corresponding to different reflection counts, the boundary of a defect can be evaluated highly accurately by comparing such pieces of data. In addition, because a test specimen can be evaluated without taking samples, it is possible to use structures having various shapes as evaluation specimens. Furthermore, even when the test specimen has some variation in thickness, evaluations can be made by reflecting such a variation as a measurement condition so that the thickness variation is reflected to the signal processing.

In this embodiment, the signals having reflected eight times have been used, but this reflection count is merely one example. The ultrasonic testing method may use a reflection count resulting in an average strength of a predetermined value with respect to the signal strength of the reference reflection count, e.g., 50% thereof, as the target reflection count to be evaluated. The method for establishing the reference is not limited to any particular method. As an example of the method for establishing the reference, it is possible to run experiments or the like to detect conditions under which a boundary of a defect, such as defective bonding, is detected, and the reflection count by which the boundary is detected may be used as the reference.

By identifying the target reflection count to be evaluated, and evaluating the signals having been evaluated with the same reference, it is possible to determine whether the test specimen has a defect or is flawless, based on the reference strength. By identifying the target reflection count to be evaluated, the ultrasonic testing method can create an image from the signals evaluated based on the same reference, and developed onto a plane of the evaluation specimen 8, as illustrated in FIG. 12. With this, it is possible to detect the shape of a defect in an easy-to-understand manner.

In the explanation above, the ultrasonic testing device 100 is applied to a laminate that is a lamination of flat plates as the test specimen, but the test specimen is not limited thereto. The test specimen may have a curved surface or a bent portion. The ultrasonic testing device 100 can store therein information about the shape of the test specimen and information on the lamination of the layers, and based on these pieces of information and the information on the test position, the device can make an evaluation of a defect at each position, by processing the information on a plurality of numbers of times the detected ultrasonic signals have reflected. In this case, the ultrasonic testing device 100 may have a structure in which the flaw detector 10 including the transducer element 110 is flexible and deforms along the test specimen.

The ultrasonic testing device 100 may include a medium capable of propagating ultrasonic signals S, between the transducer element 110 and the test specimen **8.** The medium A filling the space between the transducer element 110 and the test specimen 8 may be any medium capable of propagating ultrasonic waves. The medium A may be, for example, ultrasonic transmission gel or water. When ultrasonic transmission gel is to be used as the medium A, for example, by pressing a pocket of the ultrasonic transmission gel against the surface of the test specimen 8 with appropriate force, the ultrasonic transmission gel deforms according to the shape of the test specimen 8, even if the test specimen 8 has a complex shape. This allows the gap between the test specimen 8 and the probe 11 to be filled with the medium A without any space remaining therebetween. For the simplicity of explanation, it is assumed herein that the space between the transducer element 110 and the test specimen 8 is filled with a single type of the medium **A.** In this manner, the ultrasonic signal S propagates through the medium A, between the probe 11 and the test specimen 8.

It is also possible to configure the ultrasonic testing device 100 to separate the paths of the ultrasonic waves having reflected a plurality of numbers of times, based on the received signals, and evaluate the position and the condition of a defect by comparing the strengths of the reflection signals along the respective paths. For example, by identifying components, e.g., a component having reflected between the first layer 50 and the bonding layer 54 multiple times, a component of the signal having reflected in the bonding layer 54 multiple times, and then returned to the first layer 50 and having become incident on the probe, and a component having reflected from the boundary between the bonding layer 54 and the second layer multiple times, based on the time received, it is possible to determine whether there is any defect on the boundary between the first layer 50 and the bonding layer 54, within the bonding layer 54, or between the second layer 52 and the bonding layer 54. With such processing, although computational burden for signal processing increases, it is possible to estimate the condition of a defect, in addition to the size and the position of the defect. Assuming that to be evaluated is the bonding condition along the boundary, examples of a defective condition include complete defective bonding, a one-side defective bonding, and a hollow defect. A complete defective bonding is a condition in which there is a cavity not filled with adhesive, for example, on the boundary between two layers. A one-side defective bonding is a condition in which there is a cavity between the adhesive and one of the layers. A hollow defect is a condition in which there is a space inside the adhesive.

### Actions and Effects Achieved

The ultrasonic testing method includes: a step of collecting data obtained by scanning a test specimen that is a lamination of a plurality of layers in a manner that a transducer element transmits ultrasonic signals to the test specimen and receives the ultrasonic signals reflected from the test specimen; a step of extracting, for the ultrasonic signals transmitted and received by the transducer element, a detection result corresponding to each reflection count, the reflection count being each one of a plurality of numbers of times a received wave has reflected between the layers, based on a position of a boundary between the layers; and a step of rendering an image based on a result of a comparison between detection results corresponding to different reflection counts; and evaluating a defect of two layers forming the boundary of the test specimen on the image. In this manner, it becomes possible to test a test specimen with a laminate structure at a higher efficiency and accuracy. Furthermore, because it is possible to obtain a plurality of pieces of data corresponding to different reflection counts, the boundary of a defect can be evaluated highly accurately by comparing such pieces of data. In addition, because a test specimen can be evaluated without taking samples, it is possible to use structures having various shapes as evaluation specimens. Furthermore, even when the test specimen has some variation in thickness, evaluations can be made by reflecting such a variation as a measurement condition so that the thickness variation is reflected to the signal processing.

Preferably, the step of evaluating the defect includes detecting an area of the defect on a plane in parallel with a surface of the test specimen. In this manner, a defect in the boundary can be evaluated with a simple process, based on the acquired signals having reflected a plurality of numbers of times.

Preferably, the step of evaluating includes detecting a size of the defect based on an outer edge of the defect. In this manner, the size as well as the position of the defect can be evaluated.

Preferably, the step of evaluating the defect includes establishing a reflection count resulting in an average strength of a predetermined value with respect to a strength of a reference reflection count, as a target reflection count to be evaluated. In this manner, the external shape of the defect can be evaluated highly accurately.

Preferably, the step of evaluating the defect includes evaluating a position and a condition of a defect in two layers in a manner that separates, based on received signals, paths of ultrasonic waves having reflected a plurality of numbers of times and compares strengths of reflections along the respective paths. In this manner, it becomes possible to evaluate what kind of defect is present at which positions of the two layers.

Preferably, the step of rendering the image includes normalizing signal values at respective scanned positions, based on an evaluation of a reflection count corresponding to a reference count, and the reference count is a smaller number of reflections than the evaluation count. In this manner, it becomes possible to normalize the signals detected from the test specimen 8, and to compare the resultant signals, so that a flawless area and a defect can be determined based on information detected from the one test specimen.

Preferably, the image is of a cross section in a direction orthogonal to a surface of the test specimen, and the image presents a reflection signal having a larger reflection count, at a position nearer to a bottom, in a vertical direction. In this manner, the operator can compare the signals having reflected a plurality of numbers of times, more easily.

Preferably, the image is of a plane in parallel with the surface of the test specimen, and is based on an output of a reflected wave having gone through reflections of the evaluation count. In this manner, it becomes easier to check at which position the defect is located on the plane.

Preferably, the step of rendering the image includes processing information on a plurality of numbers of times a detected ultrasonic signal has reflected, based on shape information of the test specimen and information on a lamination of the layers. In this manner, it becomes possible to detect defects in a test specimen having various shapes on the surface and various internal shapes (shapes with varying thickness).

Preferably, the test specimen includes a first layer that is a surface layer with which the transducer element is brought into contact, a second layer that is laminated on the first layer, and a bonding layer that bonds the first layer to the second layer, and the boundary between the layers is a boundary between the first layer and the bonding layer. In this manner, it becomes possible to detect a result from the boundary between the first layer and the bonding layer, efficiently.

Preferably, a plurality of the transducer elements are arranged in parallel, and the step of collecting the data includes scanning in a direction intersecting with a direction in which the plurality of the transducer elements are arranged. In this manner, it is possible improve the efficiency of the test.

The ultrasonic testing device includes: a transducer element configured to transmit ultrasonic signals to a test specimen that is a lamination of a plurality of layers, and to receive the ultrasonic signals reflected from the test specimen; and an arithmetic processing unit configured to collect pieces of data obtained by scanning the test specimen with the ultrasonic signals using the transducer element, and to process and to combine the collected pieces of data of the ultrasonic signals, wherein the arithmetic processing unit is configured to: extract, for the ultrasonic signals transmitted and received by the transducer element, a detection result corresponding to each reflection count, the reflection count being each one of a plurality of numbers of times a received wave has reflected between the layers, based on a position of a boundary between the layers; render an image based on a result of a comparison between detection results corresponding to different reflection counts; and evaluate a defect of two layers forming the boundary of the test specimen on the image. In this manner, it becomes possible to test a test specimen with a laminate structure at a higher efficiency and accuracy. Furthermore, because it is possible to obtain a plurality of pieces of data corresponding to different reflection counts, the boundary of a defect can be evaluated highly accurately by comparing such pieces of data. In addition, because a test specimen can be evaluated without taking samples, it is possible to use structures having various shapes as an evaluation specimen. Furthermore, even when the test specimen has some variation in thickness, evaluations can be made by reflecting such a variation as a measurement condition so that the thickness variation is reflected to the signal processing.

The program causes a computer to execute: a step of collecting data obtained by scanning a test specimen that is a lamination of a plurality of layers, by causing a transducer element to transmit ultrasonic signals to the test specimen and to receive the ultrasonic signals reflected from the test specimen; a step of extracting, for the ultrasonic signals transmitted and received by the transducer element, a detection result corresponding to each reflection count, the reflection count being each one of a plurality of numbers of times a received wave has reflected between the layers, based on a position of a boundary between the layers; a step of rendering an image based on a result of a comparison between detection results corresponding to different reflection counts; and a step of evaluating a defect of two layers forming the boundary of the test specimen on the image. In this manner, it becomes possible to test a test specimen with a laminate structure at a higher efficiency and accuracy. Furthermore, because it is possible to obtain a plurality of pieces of data corresponding to different reflection counts, the boundary of a defect can be evaluated highly accurately by comparing such pieces of data. In addition, because a test specimen can be evaluated without taking samples, it is possible to use structures having various shapes as evaluation specimens. Furthermore, even when the test specimen has some variation in thickness, evaluations can be made by reflecting such a variation as a measurement condition so that the thickness variation is reflected to the signal processing.

### Reference Signs List

- 8: Test specimen
- 10: Flaw detector
- 11, 11a: Probe
- 12: Pulser
- 13: Receiver
- 14: Data storage unit
- 15: Control element switching unit
- 20: Calculation unit
- 21: Control unit
- 22: Storage unit
- 23: First arithmetic processing unit
- 24: Second arithmetic processing unit
- 30: Operation/display unit
- 31: Calculation result displaying unit
- 32: Testing condition setting unit
- 33: Calculation condition setting unit
- 50: First layer
- 52: Second layer
- 54: Bonding layer
- 56: Defect
- 61: Matrix array probe
- 70: Power supply unit
- 100: Ultrasonic testing device
- 110: Transducer element

## Claims

1. An ultrasonic testing method comprising the steps of:
collecting data obtained by scanning (S10) a test specimen (8) that is a lamination of a plurality of layers (50,54,52) in a manner that a transducer element (110) transmits ultrasonic signals to the test specimen (8) and receives the ultrasonic signals reflected from the test specimen (8);
extracting, from the ultrasonic signals transmitted and received by the transducer element (110), a detection result for a reflection count, the reflection count being each one of a plurality of numbers of times a received wave has reflected between the layers based on a position of a boundary between the layers;
rendering (S16) an image based on a result of a comparison between detection results for different reflection counts; and
evaluating a defect (56) of two layers forming the boundary of the test specimen (8) on the image,
wherein the test specimen (8) includes a first layer (50) that is a surface layer with which the transducer element (110) is brought into contact, a second layer (52) that is laminated on the first layer, and a bonding layer (54) that bonds the first layer (50) to the second layer (52), and
the step of rendering the image includes normalizing signal values at respective scanning positions based on a strength of a signal with a reference count of reflections, wherein the reference count is a smaller number of reflections than a target reflection count to be evaluated,
the step of evaluating (S18) the defect (56) includes evaluating a position and a condition of a defect (56) in two layers in a manner that separates, based on received signals, paths of ultrasonic waves having reflected a plurality of numbers of times, and by identifying components including a component having reflected between the first layer (50) and the bonding layer (54) a plurality of number of times, a component of an incident signal having reflected in the bonding layer (54) a_plurality of number of times and then returned to the first layer (50), and a component having reflected from the boundary between the bonding layer (54) and the second layer (52) a plurality of numbers of times, based on a time received, determines whether there is any defect (56) on the boundary between the first layer (50) and the bonding layer(54), or within the bonding layer (54), or between the second layer (52) and the bonding layer (54), compares the signal strength of the target reflection count to be evaluated, which is normalized based on the strength of the signal with the reference count, at each positions .

2. The ultrasonic testing method according to claim 1, wherein the step of evaluating the defect (56) includes detecting an area of the defect (56) on a plane in parallel with a surface of the test specimen (8).

3. The ultrasonic testing method according to claim 1 or 2, wherein the step of evaluating the defect (56) includes detecting a size of the defect (56) based on an outer edge of the defect (56).

4. The ultrasonic testing method according to any one of claims 1 to 3, wherein the step of evaluating the defect includes establishing a reflection count resulting in an average strength of a predetermined value with respect to a strength of a reference reflection count, as a target reflection count to be evaluated.

5. The ultrasonic testing method according to claim 4, wherein the image is of a cross section in a direction orthogonal to a surface of the test specimen (8), and the image presents a reflection signal having a larger reflection count at a position nearer to a bottom in a vertical direction.

6. The ultrasonic testing method according to claim 4, wherein the image is of a plane in parallel with the surface of the test specimen (8), and is based on an output of a reflected wave having gone through reflections of the target reflection count to be evaluated.

7. The ultrasonic testing method according to any one of claims 1 to 6, wherein the step of rendering the image includes processing information on a plurality of numbers of times a detected ultrasonic signal has reflected, based on shape information of the test specimen (8) and information on a lamination of the layers.

8. The ultrasonic testing method according to any one of claims 1 to 7, wherein
the transducer element (110) includes a plurality of transducer elements arranged in parallel, and
the step of collecting the data includes scanning in a direction intersecting with a direction in which the plurality of transducer elements are arranged.

9. An ultrasonic testing device (100) comprising:
a transducer element (110) configured to transmit ultrasonic signals to a test specimen (8) that is a lamination of a plurality of layers, and to receive the ultrasonic signals reflected from the test specimen (8); and
an arithmetic processing unit (23,24) configured to collect pieces of data obtained by scanning the test specimen (8) with the ultrasonic signals using the transducer element (110), and to process and combine the collected pieces of data of the ultrasonic signals, wherein
the arithmetic processing unit (23,24) is configured to:
extract, from the ultrasonic signals transmitted and received by the transducer element (110), a detection result for a reflection count, the reflection count being each one of a plurality of numbers of times a received wave has reflected between the layers based on a position of a boundary between the layers;
render an image based on a result of a comparison between detection results for different reflection counts; and
evaluate a defect of two layers forming the boundary of the test specimen (8) on the image, and
the test specimen (8) includes a first layer (50) that is a surface layer with which the transducer element (110) is brought into contact, a second layer (52) that is laminated on the first layer, and a bonding layer (54) that bonds the first layer (50) to the second layer;
the arithmetic processing unit (23,24) is further configured to normalize
signal values at respective scanning positions based on a strength of a signal with a reference count of reflections, wherein the reference count is a smaller number of reflections than a target reflection count to be evaluated; and
to evaluate the defect by evaluating a
position and a condition of a defect in two layers in a manner that separates, based on received signals, paths of ultrasonic waves having reflected a plurality of numbers of times, and by identifying components including a component having reflected between the first layer (50) and the bonding layer (54) a plurality of number of times, a component of an incident signal having reflected in the bonding layer (54) a plurality of number of times and then returned to the first layer, and a component having reflected from the boundary between the bonding layer (54) and the second layer (52) a plurality of numbers of times, based on a time received, determines whether there is any defect on the boundary between the first layer (50) and the bonding layer (54), or within the bonding layer (54), or between the second layer (52) and the bonding layer (54);
the arithmetic processing unit (23,24) is further configured to compare the signal strength of the target reflection count to be evaluated, which is normalized based on the strength of the signal with the reference count, at each positions.

10. A program comprising instructions which when executed by an arithmetic processing unit of the device of claim 9, cause the device of claim 9 to execute the steps of:
collecting data obtained by scanning a test specimen (8) that is a lamination of a plurality of layers in a manner that a transducer element (110) transmits ultrasonic signals to the test specimen (8) and receives the ultrasonic signals reflected from the test specimen (8);
extracting, from the ultrasonic signals transmitted and received by the transducer element (110), a detection result for a reflection count, the reflection count being each one of a plurality of numbers of times a received wave has reflected between the layers based on a position of a boundary between the layers;
rendering an image based on a result of a comparison between detection results for different reflection counts; and
evaluating a defect of two layers forming the boundary of the test specimen (8) on the image,
wherein the test specimen (8) includes a first layer (50) that is a surface layer with which the transducer element (110) is brought into contact, a second layer (52) that is laminated on the first layer, and a bonding layer (54) that bonds the first layer (50) to the second layer, the step of rendering the image includes normalizing signal values at respective scanning positions based on a strength of a signal with a reference count of reflections, wherein the reference count is a smaller number of reflections than a target reflection count to be evaluated,
and
the step of evaluating the defect includes evaluating a position and a condition of a defect in two layers in a manner that separates, based on received signals, paths of ultrasonic waves having reflected a plurality of numbers of times, and by identifying components including a component having reflected between the first layer (50) and the bonding layer (54) a plurality of number of times, a component of an incident signal having reflected in the bonding layer (54) a plurality of number of times and then returned to the first layer, and a component having reflected from the boundary between the bonding layer (54) and the second layer (52) a plurality of numbers of times, based on a time received, determines whether there is any defect on the boundary between the first layer (50) and the bonding layer (54), or within the bonding layer (54), or between the second layer (52) and the bonding layer (54); compares the signal strength of the target reflection count to be evaluated, which is normalized based on the strength of the signal with the reference count, at each positions.

## Patentansprüche

1. Ultraschallprüfverfahren, umfassend die Schritte:
Sammeln von Daten, die durch Scannen (S10) eines Prüflings (8), der eine Laminierung aus einer Mehrzahl von Schichten (50, 54, 52) ist, auf eine Weise erhalten werden, bei der ein Wandlerelement (110) Ultraschallsignale an den Prüfling (8) überträgt und die von dem Prüfling (8) reflektierten Ultraschallsignale empfängt;
Extrahieren, aus den von dem Wandlerelement (110) übertragenen und empfangenen Ultraschallsignalen, eines Detektionsergebnisses für eine Reflexionszahl, wobei die Reflexionszahl jede aus einer Mehrzahl von Anzahlen von Malen ist, die eine empfangene Welle zwischen den Schichten reflektiert wurde, und zwar basierend auf einer Position einer Grenze zwischen den Schichten;
Rendern (S16) eines Bildes basierend auf einem Ergebnis eines Vergleichs zwischen Detektionsergebnissen für unterschiedliche Reflexionszahlen; und
Auswerten eines Defekts (56) zweier Schichten, welche die Grenze des Prüflings (8) bilden, auf dem Bild,
wobei der Prüfling (8) eine erste Schicht (50), die eine Flächen- bzw. Oberflächenschicht ist, mit der das Wandlerelement (110) in Kontakt gebracht wird, eine zweite Schicht (52), die auf die erste Schicht laminiert ist, und eine Bindeschicht (54) beinhaltet, welche die erste Schicht (50) mit der zweiten Schicht (52) verbindet, und
der Schritt des Renderns des Bildes ein Normalisieren von Signalwerten an jeweiligen Scanpositionen basierend auf einer Stärke eines Signals mit einer Referenzzahl an Reflexionen beinhaltet, wobei die Referenzzahl eine kleinere Anzahl an Reflexionen ist als eine auszuwertende Sollreflexionszahl,
der Schritt des Auswertens (S18) des Defekts (56) ein Auswerten einer Position und eines Zustands eines Defekts (56) in zwei Schichten auf eine Weise beinhaltet, die basierend auf empfangenen Signalen Wege von Ultraschallwellen trennt, die eine Mehrzahl von Anzahlen von Malen reflektiert wurden, und durch Identifizieren von Komponenten, einschließlich einer Komponente, die zwischen der ersten Schicht (50) und der Bindeschicht (54) eine Mehrzahl einer Anzahl von Malen reflektiert wurden, einer Komponente eines einfallenden Signals, das in der Bindeschicht (54) eine Mehrzahl einer Anzahl von Malen reflektiert wurde und dann zu der ersten Schicht (50) zurückgekehrt ist, und einer Komponente, die von der Grenze zwischen der Bindeschicht (54) und der zweiten Schicht (52) eine Mehrzahl von Anzahlen von Malen reflektiert wurde, basierend auf einer empfangenen Zeit bestimmt, ob ein Defekt (56) an der Grenze zwischen der ersten Schicht (50) und der Bindeschicht (54) oder innerhalb der Bindeschicht (54) oder zwischen der zweiten Schicht (52) und der Bindeschicht (54) vorliegt, die Signalstärke der auszuwertenden Sollreflexionszahl, die basierend auf der Stärke des Signals normalisiert wird, mit der Referenzzahl vergleicht, und zwar an jeder Position.

2. Ultraschallprüfverfahren nach Anspruch 1, wobei der Schritt des Auswertens des Defekts (56) ein Detektieren eines Bereichs des Defekts (56) auf einer Ebene parallel zu einer Fläche bzw. Oberfläche des Prüflings (8) beinhaltet.

3. Ultraschallprüfverfahren nach Anspruch 1 oder 2, wobei der Schritt des Auswertens des Defekts (56) ein Detektieren einer Größe des Defekts (56) basierend auf einer Außenkante des Defekts (56) beinhaltet.

4. Ultraschallprüfverfahren nach einem der Ansprüche 1 bis 3, wobei der Schritt des Auswertens des Defekts ein Erstellen einer Reflexionszahl beinhaltet, die in einer Durchschnittsstärke eines vorbestimmten Wertes in Bezug auf eine Stärke einer Referenzreflexionszahl resultiert, und zwar als eine auszuwertende Sollreflexionszahl.

5. Ultraschallprüfverfahren nach Anspruch 4, wobei das Bild von einem Querschnitt in einer Richtung orthogonal zu einer Fläche bzw. Oberfläche des Prüflings (8) ist und das Bild ein Reflexionssignal mit einer höheren Reflexionszahl an einer Position näher an einem Boden in einer vertikalen Richtung darstellt.

6. Ultraschallprüfverfahren nach Anspruch 4, wobei das Bild von einer Ebene parallel zu der Oberfläche des Prüflings (8) ist und auf einer Ausgabe einer reflektierten Welle basiert, die Reflexionen der auszuwertenden Sollreflexionszahl durchlaufen hat.

7. Ultraschallprüfverfahren nach einem der Ansprüche 1 bis 6, wobei der Schritt des Renderns des Bildes ein Verarbeiten von Informationen über eine Mehrzahl von Anzahlen von Malen, die ein detektiertes Ultraschallsignal reflektiert wurde, basierend auf Forminformationen des Prüflings (8) und Informationen über eine Laminierung der Schichten beinhaltet.

8. Ultraschallprüfverfahren nach einem der Ansprüche 1 bis 7, wobei
das Wandlerelement (110) eine Mehrzahl von Wandlerelementen beinhaltet, die parallel angeordnet sind, und
der Schritt des Sammelns der Daten ein Scannen in einer Richtung beinhaltet, die sich mit einer Richtung schneidet, in der die Mehrzahl von Wandlerelementen angeordnet sind.

9. Ultraschallprüfvorrichtung (100) umfassend:
ein Wandlerelement (110), das konfiguriert ist, Ultraschallsignale an einen Prüfling (8) zu übertragen, der eine Laminierung aus einer Mehrzahl von Schichten ist, und die von dem Prüfling (8) reflektierten Ultraschallsignale zu empfangen; und
eine arithmetische Verarbeitungseinheit (23, 24), die konfiguriert ist, Datenelemente, die durch Scannen des Prüflings (8) mit den Ultraschallsignalen unter Verwendung des Wandlerelements (110) erhalten werden, zu sammeln und die gesammelten Datenelemente der Ultraschallsignale zu verarbeiten und zu kombinieren, wobei
die arithmetische Verarbeitungseinheit (23, 24) konfiguriert ist zum:
Extrahieren, aus den von dem Wandlerelement (110) übertragenen und empfangenen Ultraschallsignalen, eines Detektionsergebnisses für eine Reflexionszahl, wobei die Reflexionszahl jede aus einer Mehrzahl von Anzahlen von Malen ist, die eine empfangene Welle zwischen den Schichten reflektiert wurde, und zwar basierend auf einer Position einer Grenze zwischen den Schichten;
Rendern eines Bildes basierend auf einem Ergebnis eines Vergleichs zwischen Detektionsergebnissen für unterschiedliche Reflexionszahlen; und
Auswerten eines Defekts zweier Schichten, welche die Grenze des Prüflings (8) bilden, auf dem Bild, und
der Prüfling (8) eine erste Schicht (50), die eine Flächen- bzw. Oberflächenschicht ist, mit der das Wandlerelement (110) in Kontakt gebracht wird, eine zweite Schicht (52), die auf die erste Schicht laminiert ist, und eine Bindeschicht (54) beinhaltet, welche die erste Schicht (50) mit der zweiten Schicht (52) verbindet;
die arithmetische Verarbeitungseinheit (23, 24) ferner konfiguriert ist zum Normalisieren von Signalwerten an jeweiligen Scanpositionen basierend auf einer Stärke eines Signals mit einer Referenzzahl an Reflexionen, wobei die Referenzzahl eine kleinere Anzahl an Reflexionen ist als eine auszuwertende Sollreflexionszahl; und
Auswerten des Defekts durch Auswerten einer Position und eines Zustands eines Defekts in zwei Schichten auf eine Weise, die basierend auf empfangenen Signalen Wege von Ultraschallwellen trennt, die eine Mehrzahl von Anzahlen von Malen reflektiert wurden, und durch Identifizieren von Komponenten, einschließlich einer Komponente, die zwischen der ersten Schicht (50) und der Bindeschicht (54) eine Mehrzahl einer Anzahl von Malen reflektiert wurden, einer Komponente eines einfallenden Signals, das in der Bindeschicht (54) eine Mehrzahl einer Anzahl von Malen reflektiert wurde und dann zu der ersten Schicht zurückgekehrt ist, und einer Komponente, die von der Grenze zwischen der Bindeschicht (54) und der zweiten Schicht (52) eine Mehrzahl von Anzahlen von Malen reflektiert wurde, basierend auf einer empfangenen Zeit bestimmt, ob ein Defekt an der Grenze zwischen der ersten Schicht (50) und der Bindeschicht (54) oder innerhalb der Bindeschicht (54) oder zwischen der zweiten Schicht (52) und der Bindeschicht (54) vorliegt;
die arithmetische Verarbeitungseinheit (23,24) ferner konfiguriert ist, die Signalstärke der auszuwertenden Sollreflexionszahl, die basierend auf der Stärke des Signals normalisiert wird, mit der Referenzzahl zu vergleichen, und zwar an jeder Position.

10. Programm umfassend Anweisungen, die, wenn sie von einer arithmetischen Verarbeitungseinheit der Vorrichtung nach Anspruch 9 ausgeführt werden, die Vorrichtung nach Anspruch 9 veranlassen, die Schritte auszuführen:
Sammeln von Daten, die durch Scannen eines Prüflings (8), der eine Laminierung aus einer Mehrzahl von Schichten ist, auf eine Weise erhalten werden, bei der ein Wandlerelement (110) Ultraschallsignale an den Prüfling (8) überträgt und die von dem Prüfling (8) reflektierten Ultraschallsignale empfängt;
Extrahieren, aus den von dem Wandlerelement (110) übertragenen und empfangenen Ultraschallsignalen, eines Detektionsergebnisses für eine Reflexionszahl, wobei die Reflexionszahl jede aus einer Mehrzahl einer Anzahl von Anzahlen von Malen ist, die eine empfangene Welle zwischen den Schichten reflektiert wurde, und zwar basierend auf einer Position einer Grenze zwischen den Schichten;
Rendern eines Bildes basierend auf einem Ergebnis eines Vergleichs zwischen Detektionsergebnissen für unterschiedliche Reflexionszahlen; und
Auswerten eines Defekts zweier Schichten, welche die Grenze des Prüflings (8) bilden, auf dem Bild,
wobei der Prüfling (8) eine erste Schicht (50), die eine Flächen- bzw. Oberflächenschicht ist, mit der das Wandlerelement (110) in Kontakt gebracht wird, eine zweite Schicht (52), die auf die erste Schicht laminiert ist, und eine Bindeschicht (54) beinhaltet, welche die erste Schicht (50) mit der zweiten Schicht verbindet,
der Schritt des Renderns des Bildes ein Normalisieren von Signalwerten an jeweiligen Scanpositionen basierend auf einer Stärke eines Signals mit einer Referenzzahl an Reflexionen beinhaltet, wobei die Referenzzahl eine kleinere Anzahl an Reflexionen ist als eine auszuwertende Sollreflexionszahl, und
der Schritt des Auswertens des Defekts ein Auswerten einer Position und eines Zustands eines Defekts in zwei Schichten auf eine Weise beinhaltet, die basierend auf empfangenen Signalen Wege von Ultraschallwellen trennt, die eine Mehrzahl von Anzahlen von Malen reflektiert wurden, und durch Identifizieren von Komponenten, einschließlich einer Komponente, die zwischen der ersten Schicht (50) und der Bindeschicht (54) eine Mehrzahl einer Anzahl von Malen reflektiert wurden, einer Komponente eines einfallenden Signals, das in der Bindeschicht (54) eine Mehrzahl einer Anzahl von Malen reflektiert wurde und dann zu der ersten Schicht zurückgekehrt ist, und einer Komponente, die von der Grenze zwischen der Bindeschicht (54) und der zweiten Schicht (52) eine Mehrzahl von Anzahlen von Malen reflektiert wurde, basierend auf einer empfangenen Zeit bestimmt, ob ein Defekt an der Grenze zwischen der ersten Schicht (50) und der Bindeschicht (54) oder innerhalb der Bindeschicht (54) oder zwischen der zweiten Schicht (52) und der Bindeschicht (54) vorliegt; die Signalstärke der auszuwertenden Sollreflexionszahl, die basierend auf der Stärke des Signals normalisiert wird, mit der Referenzzahl vergleicht, und zwar an jeder Position.

## Revendications

1. Méthode d'essai par ultrasons comprenant les étapes suivantes :
la collecte de données obtenues par le balayage (S10) d'une éprouvette (8) qui est une stratification d'une pluralité de couches (50, 54, 52) d'une manière telle qu'un élément transducteur (110) émette des signaux ultrasonores vers l'éprouvette (8) et reçoive les signaux ultrasonores réfléchis par l'éprouvette (8) ;
l'extraction, à partir des signaux ultrasonores émis et reçus par l'élément transducteur (110), d'un résultat de détection pour un nombre de réflexions, le nombre de réflexions étant chacun d'une pluralité de nombres de fois qu'une onde reçue s'est réfléchie entre les couches sur la base d'une position d'une limite entre les couches ;
le rendu (S16) d'une image sur la base d'un résultat d'une comparaison entre des résultats de détection pour différents nombres de réflexions ; et
l'évaluation d'un défaut (56) de deux couches formant la limite de l'éprouvette (8) sur l'image,
dans laquelle l'éprouvette (8) comporte une première couche (50) qui est une couche de surface avec laquelle l'élément transducteur (110) est mis en contact, une deuxième couche (52) qui est stratifiée sur la première couche, et une couche de liaison (54) qui lie la première couche (50) à la deuxième couche (52), et
l'étape de rendu de l'image comporte la normalisation de valeurs de signal à des positions de balayage respectives sur la base d'une intensité d'un signal avec un nombre de réflexions de référence, dans laquelle le nombre de référence est un nombre de réflexions inférieur à un nombre de réflexions cible à évaluer,
l'étape d'évaluation (S18) du défaut (56) comporte l'évaluation d'une position et d'un état d'un défaut (56) dans deux couches d'une manière qui sépare, sur la base des signaux reçus, des trajets d'ondes ultrasonores ayant été réfléchis une pluralité de fois, et en identifiant des composantes incluant une composante ayant été réfléchie entre la première couche (50) et la couche de liaison (54) une pluralité de fois, une composante d'un signal incident ayant été réfléchie dans la couche de liaison (54) une pluralité de fois puis renvoyée la première couche (50), et une composante ayant été réfléchie par la limite entre la couche de liaison (54) et la deuxième couche (52) une pluralité de fois, sur la base d'un temps reçu, détermine s'il y a un quelconque défaut (56) sur la limite entre la première couche (50) et la couche de liaison (54), ou à l'intérieur de la couche de liaison (54), ou entre la deuxième couche (52) et la couche de liaison (54), compare l'intensité du signal du nombre de réflexions cible à évaluer, qui est normalisée sur la base de l'intensité du signal avec le nombre de référence, à chaque position.

2. Méthode d'essai par ultrasons selon la revendication 1, dans laquelle l'étape d'évaluation du défaut (56) comporte la détection d'une zone du défaut (56) sur un plan parallèle à une surface de l'éprouvette (8) .

3. Méthode d'essai par ultrasons selon la revendication 1 ou 2, dans laquelle l'étape d'évaluation du défaut (56) comporte la détection d'une taille du défaut (56) sur la base d'un bord externe du défaut (56).

4. Méthode d'essai par ultrasons selon l'une quelconque des revendications 1 à 3, dans laquelle l'étape d'évaluation du défaut comporte l'établissement d'un nombre de réflexions entraînant une intensité moyenne d'une valeur prédéterminée par rapport à une intensité d'un nombre de réflexions de référence, en tant que nombre de réflexions cible à évaluer.

5. Méthode d'essai par ultrasons selon la revendication 4, dans laquelle l'image est celle d'une section transversale dans une direction orthogonale à une surface de l'éprouvette (8), et l'image présente un signal de réflexion ayant un nombre de réflexions plus élevé à une position plus proche d'une partie inférieure dans une direction verticale.

6. Méthode d'essai par ultrasons selon la revendication 4, dans laquelle l'image est celle d'un plan parallèle à la surface de l'éprouvette (8), et est basée sur une sortie d'une onde réfléchie ayant subi des réflexions correspondant au nombre de réflexions cible à évaluer.

7. Méthode d'essai par ultrasons selon l'une quelconque des revendications 1 à 6, dans laquelle l'étape de rendu de l'image comporte le traitement d'informations sur une pluralité de fois qu'un signal ultrasonore détecté a été réfléchi, sur la base d'informations de forme de l'éprouvette (8) et d'informations sur une stratification des couches.

8. Méthode d'essai par ultrasons selon l'une quelconque des revendications 1 à 7, dans laquelle
l'élément transducteur (110) comporte une pluralité d'éléments transducteurs agencés en parallèle, et
l'étape de collecte des données comporte un balayage dans une direction qui croise une direction dans laquelle la pluralité d'éléments transducteurs sont agencés.

9. Dispositif d'essai par ultrasons (100) comprenant :
un élément transducteur (110) configuré pour émettre des signaux ultrasonores vers une éprouvette (8) qui est une stratification d'une pluralité de couches, et pour recevoir les signaux ultrasonores réfléchis par l'éprouvette (8) ; et
une unité de traitement arithmétique (23, 24) configurée pour collecter des éléments de données obtenus par la balayage de l'éprouvette (8) avec les signaux ultrasonores au moyen de l'élément transducteur (110), et pour traiter et combiner les éléments de données collectés des signaux ultrasonores, dans lequel
l'unité de traitement arithmétique (23, 24) est configurée pour :
extraire, à partir des signaux ultrasonores émis et reçus par l'élément transducteur (110), un résultat de détection pour un nombre de réflexions, le nombre de réflexions étant chacun d'une pluralité de nombres de fois qu'une onde reçue s'est réfléchie entre les couches sur la base d'une position d'une limite entre les couches ;
rendre une image sur la base d'un résultat d'une comparaison entre des résultats de détection pour différents nombres de réflexions ; et
évaluer un défaut de deux couches formant la limite de l'éprouvette (8) sur l'image, et
l'éprouvette (8) comporte une première couche (50) qui est une couche de surface avec laquelle l'élément transducteur (110) est mis en contact, une deuxième couche (52) qui est stratifiée sur la première couche, et une couche de liaison (54) qui lie la première couche (50) à la deuxième couche ;
l'unité de traitement arithmétique (23, 24) est en outre configurée pour normaliser des valeurs de signal à des positions de balayage respectives sur la base d'une intensité d'un signal avec un nombre de réflexions de référence, dans lequel le nombre de référence est un nombre de réflexions inférieur à un nombre de réflexions cible à évaluer ; et
pour évaluer le défaut par l'évaluation d'une position et d'un état d'un défaut dans deux couches d'une manière qui sépare, sur la base des signaux reçus, des trajets d'ondes ultrasonores ayant été réfléchis une pluralité de fois, et par l'identification de composantes incluant une composante ayant été réfléchie entre la première couche (50) et la couche de liaison (54) une pluralité de fois, une composante d'un signal incident ayant été réfléchie dans la couche de liaison (54) une pluralité de fois puis renvoyée la première couche, et une composante ayant été réfléchie par la limite entre la couche de liaison (54) et la deuxième couche (52) une pluralité de fois, sur la base d'un temps reçu, détermine s'il y a un quelconque défaut sur la limite entre la première couche (50) et la couche de liaison (54), ou à l'intérieur de la couche de liaison (54), ou entre la deuxième couche (52) et la couche de liaison (54) ;
l'unité de traitement arithmétique (23, 24) est en outre configurée pour comparer l'intensité du signal du nombre de réflexions cible à évaluer, qui est normalisée sur la base de l'intensité du signal avec le nombre de référence, à chaque position.

10. Programme comprenant des instructions qui, lorsqu'elles sont exécutées par une unité de traitement arithmétique du dispositif selon la revendication 9, amènent le dispositif selon la revendication 9 à exécuter les étapes suivantes :
la collecte de données obtenues par le balayage d'une éprouvette (8) qui est une stratification d'une pluralité de couches d'une manière telle qu'un élément transducteur (110) émette des signaux ultrasonores vers l'éprouvette (8) et reçoive les signaux ultrasonores réfléchis par l'éprouvette (8) ;
l'extraction, à partir des signaux ultrasonores émis et reçus par l'élément transducteur (110), d'un résultat de détection pour un nombre de réflexions, le nombre de réflexions étant chacun d'une pluralité de nombres de fois qu'une onde reçue s'est réfléchie entre les couches sur la base d'une position d'une limite entre les couches ;
le rendu d'une image sur la base d'un résultat d'une comparaison entre des résultats de détection pour différents nombres de réflexions ; et
l'évaluation d'un défaut de deux couches formant la limite de l'éprouvette (8) sur l'image,
dans lequel l'éprouvette (8) comporte une première couche (50) qui est une couche de surface avec laquelle l'élément transducteur (110) est mis en contact, une deuxième couche (52) qui est stratifiée sur la première couche, et une couche de liaison (54) qui lie la première couche (50) à la deuxième couche ;
l'étape de rendu de l'image comporte la normalisation de valeurs de signal à des positions de balayage respectives sur la base d'une intensité d'un signal avec un nombre de réflexions de référence, dans lequel le nombre de référence est un nombre de réflexions inférieur à un nombre de réflexions cible à évaluer,
et
l'étape d'évaluation du défaut comporte l'évaluation d'une position et d'un état d'un défaut dans deux couches d'une manière qui sépare, sur la base des signaux reçus, des trajets d'ondes ultrasonores ayant été réfléchis une pluralité de fois, et en identifiant des composantes incluant une composante ayant été réfléchie entre la première couche (50) et la couche de liaison (54) une pluralité de fois, une composante d'un signal incident ayant été réfléchie dans la couche de liaison (54) une pluralité de fois puis renvoyée la première couche, et une composante ayant été réfléchie par la limite entre la couche de liaison (54) et la deuxième couche (52) une pluralité de fois, sur la base d'un temps reçu, détermine s'il y a un quelconque défaut sur la limite entre la première couche (50) et la couche de liaison (54), ou à l'intérieur de la couche de liaison (54), ou entre la deuxième couche (52) et la couche de liaison (54) ; compare l'intensité du signal du nombre de réflexions cible à évaluer, qui est normalisée sur la base de l'intensité du signal avec le nombre de référence, à chaque position.
